# EUROPEAN PATENT SPECIFICATION

(11) **EP 2 055 198 B1**
(45) Date of publication and mention of the grant of the patent: **08.12.2010**
(21) Application number: 07254267.3
(22) Date of filing: 29.10.2007
(51) Int. Cl.: A23L 1/24, A23L 1/30

(54) **Dressing composition**
Dressingzusammensetzung
Composition d'assaisonnement

(43) Date of publication of application: 06.05.2009
(73) Proprietor: Lipid Nutrition B.V., 1521 AZ Wormerveer (NL)
(72) Inventor: Mulder, Ellen Maria Elizabeth, 1521 AZ Wormerveer (NL); Van Wanroij, Miriam Aldegonda Josephina, 1521 AZ Wormerveer (NL); Schmid, Ulrike, 1521 AZ Wormerveer (NL)
(74) Representative: Probert, Gareth David

(56) References cited:
- EP-A- 1 088 552
- EP-A- 1 685 834
- US-A1- 2006 172 023

## Description

This invention relates to a dressing composition and to a process for its production.

A dressing is a sauce often used to accompany a salad. Dressings are often emulsions formed from an aqueous phase and a fat phase. Examples of dressings include vinaigrette and mayonnaise. A dressing in the form of emulsion can be prepared so that the phases separate out, or remain emulsified, for example through the use of emulsifiers. Dressings can be oil-in-water emulsions or water-in-oil emulsions.

The nutritional value of the diet has come under increasing scrutiny. Food supplements are often taken by individuals in order to obtain nutritional benefits. However, food supplements are typically in the form of capsules or the like and have the disadvantage that they are inconvenient in that individual has to remember to take them. Food supplements of this type are typically not flavoured and are not attractive to many consumers.

Nutritional supplements have been incorporated into food products but the resulting food products can have an undesirable taste and the incorporation of the supplement can have a deleterious effect on the stability of the products.

Pinolenic acid (i.e., 5, 9, 12 C18:3 fatty acid, a fatty acid with 18 carbon atoms having three *cis* double bonds in the positions 5, 9 and 12) is present in, for example, pine nut oil and fractions thereof (see J Am Oil Chem Soc 1998, 75, p.45-50). Pinolenic acid, as a highly unsaturated fatty acid, can be expected to suffer from the problem of low oxidative stability, particularly when incorporated into foods and beverages.

FR-A-2756465 discloses the use of a concentrate with 15% pinolenic acid in various compositions, including food additives. The presence of pinolenic acid is described as providing a hypolipemic effect to the composition. There is no indication in the document as to how a food composition can be prepared and no examples are given.

EP-A-1685834 relates to the use of pinolenic acid and its derivatives for weight management by reducing the feeling of hunger and/or increasing satiety. A variety of product forms are mentioned.

It has now been found that a convenient vehicle for the consumption of pinolenic acid and its derivatives can be provided by dressing compositions. Surprisingly, it is possible to incorporate the pinolenic acid or derivative in these compositions in relatively high amounts and yet still achieve good oxidative stability compared to other, less unsaturated oils. In other words, the pinolenic acid or derivative thereof has the same or better oxidative stability than oils with a similar level of unsaturation. The compositions also have good organoleptic properties (including taste and texture) and good stability. Additionally, it is possible for the dressing compositions to have a low calorie content and still achieve these advantages.

According to the present invention there is a dressing composition according to claim 1, a process for producing the dressing composition of Claim 1 according to claim 18, and the use of such a dressing composition according to claim 22.

According to one aspect of the invention, there is provided a dressing composition comprising a fat phase, said fat phase comprising from 5 to 35% by weight pinolenic acid or a derivative thereof.

Preferably, the fat phase comprises from 13 to 35% by weight pinolenic acid or a derivative thereof.

Also disclosed herein, there is provided a dressing composition comprising a fat phase having a fat A and a fat B, wherein fat A comprises from 5 to 35% by weight pinolenic acid or a derivative thereof, and wherein fat B is a liquid oil.

Preferably, the liquid oil comprises olive oil, extra virgin olive oil, and/or native olive oil.

Advantageously, the fat phase comprises a blend of fat A and fat B.

Conveniently, fat A comprises from 13 to 30% by weight pinolenic acid or a derivative thereof.

Advantageously, fat B comprises from 20 to 90% by weight of the fat phase.

Preferably fat B comprises from 35 to 90% by weight of the fat phase.

Conveniently, fat B comprises from 50 to 90% by weight of the fat phase.

Advantageously, the dressing composition comprises from 10 to 60% by weight fat.

Preferably, the dressing composition comprises from 10 to 45% by weight fat.

Conveniently, the dressing composition comprises from 10 to 30% by weight fat.

Advantageously, the dressing composition is selected from the group consisting of Ranch dressing, Italian dressing, blue cheese dressing, Thousand Island dressing and French dressing.

Preferably, the dressing composition is a Ranch dressing or an Italian dressing.

Conveniently, the dressing comprises vinegar.

Advantageously, the vinegar is balsamic vinegar.

Preferably, the dressing composition comprises from 2 to 55% by weight vinegar.

Conveniently, the dressing comprises a dairy based product.

Advantageously, the dairy based product is yoghurt.

Preferably, the dairy based product is buttermilk.

Conveniently, the dressing comprises mayonnaise.

Advantageously, the dressing composition comprises a sweetener.

Preferably, the dressing composition comprises one or more additives selected from flavours, colouring agents, vitamins, acidity regulators, preservatives, emulsifiers, thickeners, antioxidants, dietary fibres and mixtures thereof.

Conveniently, the pinolenic acid or a derivative thereof is incorporated in the dressing composition in the form of a powder.

According to a further aspect of the invention, there is provided a process for producing a dressing composition of the invention, which comprises admixing a fat phase which comprises from 5 to 35% by weight pinolenic acid or a derivative thereof, with an aqueous phase to give the dressing composition.

Also disclosed therein, there is provided a process for producing a dressing composition of the invention, which comprises admixing a fat phase having a fat A and a fat B, wherein fat A comprises from 5 to 35% by weight pinolenic acid or a derivative thereof, and wherein fat B is a liquid oil, with an aqueous phase to give the dressing composition.

Conveniently, the process further comprises the step of mixing together fat A with fat B to give the fat phase before the fat phase is admixed with the aqueous phase.

Advantageously, the process comprises the steps of adding fat A and fat B to the aqueous phase separately.

Preferably, the process further comprises the step of forming an emulsion of the fat with the aqueous phase.

Conveniently, the pinolenic acid or derivative thereof is incorporated in the dressing in the form of a powder.

Advantageously, the powder is produced by spray drying the pinolenic acid or its derivatives, or a fat comprising pinolenic acid or its derivatives, with protein and/or carbohydrate.

According to a yet further aspect of the invention, there is provided a dressing composition of the invention for use in providing a nutritional benefit.

Preferably, the benefit is a weight management effect, for example due to a feeling of satiety.

It has been found that dressings of the invention have good mouthfeel. Surprisingly, they have a long shelf life, with texture, appearance and colour remaining good.

Moreover, despite the level of unsaturation of pinolenic acid, the dressings have unexpectedly good oxidative stability when compared to other oils, such as high oleic sunflower oil, sunflower oil, CLA and fish oils.

Preferably, the fat phase of the dressing composition comprises from 5 to 35% by weight pinolenic acid or derivative thereof, more preferably from 10 to 30% by weight pinolenic acid or derivative thereof, even more preferably from 13 to 25% by weight pinolenic acid or derivative thereof, such as from 13 to 20% by weight pinolenic acid or derivative thereof.

The fat phase of the dressing composition may further comprise linoleic acid or a derivative thereof. When the dressing comprises linoleic acid or a derivative thereof, the weight ratio of pinolenic acid or derivative thereof to linoleic acid or derivative thereof is preferably more than 0.15:1, even more preferably from 0.2:1 to 0.8:1.

The dressing composition may comprise a flavouring substance. Flavouring substances may be used singly or in combination and include natural and artificial flavouring agents.

Sucrose, glucose and fructose may be specifically added or may be present as part of another component of the dressing. The dressing may comprise a sugar replacer and/or a sweetener.

Examples of suitable sweeteners are saccharin, aspartame, sucralose, neotame and acesulfame potassium, acesulfame, taumatine, cyclamate, and mixtures thereof. Preferred sweeteners are those selected from aspartame, acesulfame, sucralose and mixtures thereof.

Sugar replacers include, for example, sorbitol, mannitol, isomaltitol, xylitol, isomalt, lactitol, hydrogenated starch hydrolysates (HSH, including maltitol syrups) and mixtures thereof.

The dressing composition may comprise a dairy based product, such as yoghurt and/or buttermilk.

The dressing may additionally comprise a source, of dietary fibre. Dietary fibres are complex carbohydrates resistant to digestion by mammalian enzymes, such as the carbohydrates found in plant cell walls and seaweed, and those produced by microbial fermentation.

Dressings of the invention optionally comprise one or more additional additives selected from colouring agents, vitamins, minerals, acidity regulators, preservatives, emulsifiers, antioxidants and mixtures thereof. Each of these materials may be a single component or a mixture of two or more components.

Examples of suitable vitamins and minerals include calcium, iron, zinc, copper, phosphorous, biotin, folic acid, pantothenic acid, iodine, vitamin A, vitamin C, vitamin B1, vitamin B2, vitamin B3, vitamin B6, vitamin B9, vitamin B12, vitamin D, vitamin E, and vitamin K. Preferably, when a vitamin or mineral is utilized the vitamin or mineral is selected from iron, zinc, folic acid, iodine, vitamin A, vitamin C, vitamin B2, vitamin B3, vitamin B6, vitamin B12, vitamin D, and vitamin E.

Acidity regulators include organic as well as inorganic edible acids. The acids can be added or be present in their undissociated form or, alternatively, as their respective salts, for example, potassium or sodium hydrogen phosphate, potassium or sodium dihydrogen phosphate salts. The preferred acids are edible organic acids which include citric acid, malic acid, fumaric acid, adipic acid, phosphoric acid, gluconic acid, tartaric acid, ascorbic acid, acetic acid, phosphoric acid, or mixtures thereof. Glucono Delta Lactone (GDL) may also be used, particularly wherein it is desired to reduce pH without introducing excessive acidic, or tart, flavour in the final composition. Citric acid is particularly useful.

Colouring agents including natural and artificial colours may optionally be used. Non-limiting examples of colouring agents include vegetable juices, riboflavin, carotenoids (e.g. p-carotene), tumeric, and lycopenes.

Preservatives may be selected from the group consisting of sorbate preservatives, benzoate preservatives, and mixtures thereof.

Emulsifiers may be selected from the group consisting of egg yolk and components thereof, such as lecithin, mustard, mono- and di-glycerides and derivatives thereof and fatty acid esters, and mixtures thereof.

Antioxidants include, for example, natural or synthetic tocopherols, TBHQ, BHT, BHA, free radical scavengers, propylgallate, ascorbylesters of fatty acids and enzymes with anti-oxidant properties.

The dressing compositions of the invention may comprise one or more liquid oils, including vegetable oils such as olive oil, virgin olive oil, native olive oil and peanut oil. As used herein, the term "liquid oil" is meant to refer to fats that are liquid at room temperature, i.e. at about 25°C.

Preferably, the dressing composition of the invention is a low calorie product. For example, the dressing may have an energy content of less than 100 kcal /100g, more preferably less than 80 kcal/100g, even more preferably from 55 to 75kcal/100g. Calorie contents can be determined by methods well known to those skilled in the art, for example, as set out in Mullan, 2006, Labelling Determination of the Energy Content of Food: http://www.dairyscience.info/energy_label.asp#3 and/or FAO Food And Nutrition Paper 77, Food energy - methods of analysis and conversion factors, Report of a Technical Workshop, Rome, 3-6 December 2002, Food And Agriculture Organization of the United Nations, Rome, 2003, ISBN 92-5-105014-7.

Pinolenic acid or a derivative of pinolenic acid is an essential component of the compositions of the invention. The pinolenic acid or derivative (which term is intended to cover both pinolenic acid and derivatives when both are present) is preferably in a form selected from the free acid, salts, mono-, di- or triglycerides, or mixtures thereof.

The preferred form of pinolenic acid or a derivative thereof for use in the invention is as a glyceride. Particularly, preferred are diglycerides and triglycerides, being even more preferred.

Sources of pinolenic acid and its derivatives are available and will be known to those skilled in the art. Preferably, the pinolenic acid or derivative is in the form of pine nut oil or is derived from pine nut oil.

The pinolenic acid or derivative in the dressing compositions may form part of a fat composition that comprises one or more other components.

In a preferred embodiment of the invention, the pinolenic acid or derivative is in the form of a fat which comprises from 5 to 35%, more preferably from 10 to 30%, such as from 13 to 25%, or from 13 to 20%, by weight pinolenic acid or derivative thereof, based on the total weight of fatty acids in the fat (calculated as fatty acid methyl ester).

Examples of other fatty acids that may be present in the fat include linoleic acid, oleic acid, taxoleic, juniperonic, sciadonic, saturated fatty acids, conjugated linoleic acid (optionally as an enriched isomer mixture) and EPA (eicosapentaenoic) and DHA (docosahexaenoic).

Particularly preferred fats used in dressing compositions of the invention are those in which the pinolenic acid or derivative is in the form of a composition which additionally comprises from 30 to 70 % by weight linoleic acid or derivative thereof, based on the total weight of fatty acids in the fat (calculated as free fatty acid). Additionally or alternatively, the pinolenic acid or derivative is in the form of a fat which additionally comprises from 10 to 40 % by weight oleic acid or derivative thereof, based on the total weight of fatty acids in the fat (calculated as free fatty acid). Additionally or alternatively, the pinolenic acid or derivative is in the form of a fat which additionally comprises from 1 to 15 % by weight palmitic acid or derivative thereof, based on the total weight of fatty acids in the fat (calculated as free fatty acid). Additionally or alternatively, the fat may comprise from 0.5 to 5 wt% of taxoleic acid or a derivative thereof.

Specific examples of fats comprising pinolenic acid or a derivative thereof that are useful in the invention include the following:
- Fat compositions comprising from 5 to 35 %, more preferably from 15 to 30 %, by weight pinolenic acid or a derivative thereof, together with from 30 to 70 % by weight linoleic acid or a derivative thereof;
- Fat compositions comprising from 5 to 35 %, more preferably from 15 to 30 %, by weight pinolenic acid or a derivative thereof, together with from 10 to 40 % by weight oleic acid or a derivative thereof;
- Fat compositions comprising from 5 to 35 %, more preferably from 15 to 30 %, by weight pinolenic acid or a derivative thereof, together with from 1 to 15 % by weight palmitic acid or a derivative thereof;
- Fat compositions comprising from 5 to 35 %, more preferably from 15 to 30 %, by weight pinolenic acid or a derivative thereof, together with from 0.5 to 5 wt% of taxoleic acid or a derivative thereof;
- Fat compositions comprising from 5 to 35 %, more preferably from 15 to 30 %, by weight pinolenic acid or a derivative thereof, together with from 30 to 70 % by weight linoleic acid or a derivative thereof and from 10 to 40 % by weight oleic acid or a derivative thereof;
- Fat compositions comprising from 5 to 35 %, more preferably from 15 to 30 %, by weight pinolenic acid or a derivative thereof together with from 30 to 70 % by weight linoleic acid or a derivative thereof and from 1 to 15 % by weight palmitic acid or a derivative thereof;
- Fat compositions comprising from 5 to 35 %, more preferably from 15 to 30 %, by weight pinolenic acid or a derivative thereof together with from 30 to 70 % by weight linoleic acid or a derivative thereof and from 0.5 to 5 wt% of taxoleic acid or a derivative thereof;
- Fat compositions comprising from 5 to 35 %, more preferably from 15 to 30 %, by weight pinolenic acid or a derivative thereof together with from 30 to 70 % by weight linoleic acid or a derivative thereof, from 1 to 15 % by weight palmitic acid or a derivative thereof and from 10 to 40 % by weight oleic acid or a derivative thereof; and
- Fat compositions comprising from 5 to 35 %, more preferably from 15 to 30 %, by weight pinolenic acid or a derivative thereof, together with from 30 to 70 % by weight linoleic acid or a derivative thereof, from 1 to 15 % by weight palmitic acid or a derivative thereof, from 10 to 40 % by weight oleic acid or a derivative thereof and from 0.5 to 5 wt% of taxoleic acid or a derivative thereof.

In these fats, the amounts of the acids or derivatives are determined as fatty acid methyl esters based on the total fatty acid and/or derivative content of the fat. Preferably, the fatty acids are present as glycerides (more preferably triglycerides) (i.e., more than 90 %, preferably more than 95 %, by weight of the fatty acids are present as glycerides, more preferably triglycerides). Another preferred glyceride is the diglyceride.

In a preferred embodiment of the invention, the pinolenic acid or derivative represents at least 75 % by weight of the total Δ5-polyunsaturated C18-C20 fatty acids in the fat (calculated using fatty acid methyl ester analysis).

The pinolenic acid used in the present invention may be in the form of a free fatty acid, a derivative of pinolenic acid or mixtures thereof, including mixtures of different derivatives. Derivatives are non-toxic and edible. Derivatives of pinolenic acid, which can be used in the present invention, include salts of pinolenic acid and esters. Suitable salts include salts with food grade cations such as sodium salts and calcium salts. Suitable esters include alkyl esters having from one to six carbon atoms. Preferred derivatives are esters and preferred esters are mono-, di- and tri- glycerides and mixtures thereof.

The other fatty acid or each of the other fatty acids in the fat can independently be present as a free fatty acid or as a derivative thereof (including a mono-, di- or triglyceride and salts, preferably glycerides), or as a mixture thereof.

A suitable source for the pinolenic acid used in the present invention is pine nut oil or concentrates thereof. For example, glycerides of pinolenic acid can be obtained from pine nut oil or concentrates thereof. Preferably, an oil or concentrate with a content of pinolenic acid or a derivative thereof of more than 15 % by weight or more than 28 % by weight is used (such as up to 50 % by weight).

Concentrates of pinolenic acid or a derivative thereof that may be used in the present invention can be prepared by any suitable process. A suitable process is described in EP-A-1088552.

In one suitable process, an enzymic hydrolysis or glycerolysis is performed using an enzyme that can discriminate between fatty acids with a delta 5 double bond and other fatty acids. This process comprises:
i) reacting a glyceride material containing at least 2 % by weight of fatty acid with cis⁵ double bond with water or glycerol in the presence of an enzyme capable of discriminating between fatty acids containing a delta 5 double bond and other fatty acids;
ii) splitting the reaction mixture into a partial glyceride rich component and a fatty acid rich component;
iii) optionally converting the partial glycerides of step ii) to free fatty acids in the presence of a suitable enzyme;
iv) optionally converting the fatty acid rich component of step ii) to triglycerides by reaction with glycerol in the presence of a suitable catalyst such as a suitable enzyme; and
v) optionally splitting the partial glyceride rich material of step ii) into components that are a) rich in monoglycerides, b) rich in diglycerides and c) rich in triglycerides and then optionally converting the partial glycerides a) and b) into triglycerides by reaction with fatty acids in the presence of a suitable enzyme.

It is preferred to use a glyceride material with a pinolenic acid content of 5 to 50 wt %, preferably 10 to 35 wt % in step i). Examples of such materials are pinolenic oils and concentrates thereof. This process produces a concentrate that contains at least 28 % by weight pinolenic acid.

Enzymes suitable for use in steps i), iii), iv) and v) are lipases. Suitable commercial lipases include *Candida rugosa* lipase; Lipase QL; Lipase SL, Lipase OF; *Rhizopus delemar*; lipase; *Rhizopus oryzae* lipase; *Geotrichum candidum* B lipase; and *Rhizomucor miehei* lipase. Preferred enzymes for step i) are *Candida rugosa* lipase and *Geotrichum candidum* B lipase.

Suitable lipases also include Lipozyme IM (a commercial enzyme). The preferred enzyme for use in step iv) is Lipozyme M (from *Rhizomucor miehei*).

The fats comprising pinolenic acid or a derivative thereof that are useful in the invention may comprise one or more other fatty acids. The term fatty acid, as used herein, refers to straight chain carboxylic acids having from 12 to 24 carbon atoms and being saturated or unsaturated e.g., having 0, 1, 2 or 3 double bonds.

The pinolenic acid or derivative thereof is optionally blended with additional fatty acids or glycerides before being used in the dressing compositions of the present invention. When the compositions contain one or more fatty acids and/or glycerides in addition to the pinolenic acid or derivative thereof, the additional fatty acid(s) and/or glycerides are preferably selected from liquid oils, such as soybean oil, sunflower oil, rape seed oil, olive oil, flax seed oil and cotton seed oil; enzymically made liquid fats; fish oils and fractions thereof; conjugated linoleic acid and enriched isomer mixtures; gamma linolenic acid and enriched mixtures thereof; and mixtures thereof.

The dressing compositions of the invention may comprise additional, separately added fatty acids or derivatives thereof. Preferably, the dressing may further comprise conjugated linoleic acid (CLA) or a derivative thereof. A preferred derivative of CLA is the triglyceride.

The pinolenic acid or derivative thereof can be included in the dressing of the invention as an oil or in the form of a powder, such as a free flowing powder. Pinolenic acid and its derivatives in powder form can be produced, for example, by spray drying pinolenic acid or its derivatives, or a fat comprising pinolenic acid or its derivatives, with protein and/or carbohydrate, with the powder typically comprising from 50 to 90% by weight of fat. It has been found that use of the powder can give extra stability to the dressing composition.

The dressing compositions of the invention may be emulsions, such as oil-in-water or water-in-oil emulsions. They may separate out into different phases, or may be prepared so that they remain as an emulsion.

Dressing compositions of the invention may be prepared to give a wide variety of different types of dressings. Dressing compositions of the invention may be prepared to give known types of dressings such as Ranch dressing, Italian dressing, blue cheese dressing, Thousand Island dressing and French dressings. Ranch dressing and Italian dressings are most preferred.

Ranch dressings generally comprise buttermilk or sour cream and other ingredients such as seasoning, garlic, mayonnaise and onions.

An Italian dressing generally comprises water, oil, lemon juice or vinegar, seasoning, garlic, onions and peppers.

A blue cheese dressing generally comprises blue cheese, mayonnaise, another ingredient such as garlic, seasoning, mustard, powder, lemon juice, vinegar, milk, sour cream and sugar.

Thousand Island dressing generally comprises mayonnaise and tomato ketchup, along with other ingredients including vegetables such as onions and peppers, another ingredient such as seasoning, lemon juice, Worcestershire sauce and sugar.

French dressing generally comprises oil, and preferably olive oil, and vinegar, preferably red or white wine vinegar or lemon juice along with other ingredients such as seasoning, sugar, mustard and garlic. Other suitable types of salad dressings for the use in the invention include caesar dressing and vinaigrette.

The compositions of the invention provide significant advantages in terms of weight management. The compositions have good taste and also good stability, both in their preparation and storage. Also, the compositions of the invention can offer improved nutritional balance and are easy to use. The compositions in the invention can offer a consumer a nutritional benefit in terms of weight management. The compositions of the invention can offer a consumer a feeling of satiation.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### Examples

### Example 1

### Italian style dressing with PinnoThin^{™}

| **Ingredient** | **% by weight** |
|---|---|
| Vinegar | 21.0 |
| PinnoThin^{™} (refined pine nut oil) | 10.0 |
| Peanut oil | 10.0 |
| Sugar | 4.0 |
| Salt | 2.4 |
| Garlic | 1.0 |
| Red bell peppers | 0.5 |
| Xanthan gum Grindsted^{®} 80 (Danisco) | 0.5 |
| Onion | 0.4 |
| Garlic dried | 0.15 |
| Onion dried | 0.1 |
| Potassium sorbate | 0.1 |
| Parsley dried | 0.03 |
| Tomato paste | 0.1 |
| Annatto A-720-WS-AP (Chr. Hansen) | 0.007 |
| Caramel CA-45, 000C-WS (Chr. Hansen) | 0.007 |
| Calcium disodium EDTA | 0.0075 |
| Water till 100% | 49.7 |

The sugar, salt, potassium sorbate and EDTA were dissolved in warm water. The xanthan gum was dispersed in half of the vegetable oil and the oil-xanthan dispersion was slowly added to the water phase. Then the remaining peanut oil and the PinnoThin^{™} were slowly added. Then the vinegar, all the vegetable, herbs and spices as well as the colourants were added to give an Italian style dressing with PinnoThin^{™}.

### Example 2

| **Ingredient** | **% by weight** |
|---|---|
| PinnoThin^{™} (refined pine nut oil) | 10.0 |
| Olive oil | 10.0 |
| Buttermilk | 10.0 |
| Vinegar | 5.0 |
| Sugar | 2.0 |
| Salt | 2.0 |
| Egg yolk powder (Bouwhuis Enthoven) | 1.5 |
| Xanthan gum Grindsted^{®} 80 (Danisco) | 0.5 |
| Garlic dried | 0.3 |
| Onion dried | 0.2 |
| Pepper granulate | 0.2 |
| Lactic acid (80% solution) | 0.2 |
| Parsley dried | 0.05 |
| Calcium disodium EDTA | 0.0075 |
| Water till 100% | 49.7 |

The sugar, salt and the egg yolk powder were dry-mixed and dissolved in warm water (T∼60°C). Then the calcium disodium EDTA was added. The xanthan gum was dispersed in half of the vegetable oil and the oil-xanthan dispersion was slowly added to the water phase. The buttermilk, the remaining vegetable oil and the PinnoThin^{™} were slowly added. Then the vinegar and the lactic acid were added. Homogenization took place at 200/50 bar dual-stage. At last all herbs and spices were added to give a 'Ranch' style dressing with PinnoThin^{™}.

### PinnoThin^{™}

PinnoThin, a mixture of trglycerides, is a trademark of Lipid Nutrition BV and comprises, the following fatty acid profile (measure as fatty acid methyl esters)(in weight %):

| **Ingredient** | **% by weight** |
|---|---|
| Pinolenic acid | 16 |
| Linoleic acid | 46 |
| Oleic acid | 25 |
| Palmitic acid | 4 |
| Taxoleic acid | 2 |
| Others | balance to 100 |

## Claims

1. A dressing composition comprising a fat phase, said fat phase comprising from 5 to 35% by weight pinolenic acid or a derivative thereof.

2. A dressing composition as claimed in Claim 1 wherein the fat phase comprises from 13 to 35% by weight pinolenic acid or a derivative thereof.

3. A dressing composition as claimed in claims 1 or 2 which comprises from 10 to 60% by weight fat.

4. A dressing composition as claimed in any preceding claim which comprises from 10 to 45% by weight fat.

5. A dressing composition as claimed in any preceding claim which comprises from 10 to 30% by weight fat.

6. A dressing composition as claimed in any preceding claim selected from the group consisting of Ranch dressing, Italian dressing, blue cheese dressing, Thousand Island dressing and French dressing.

7. A dressing composition as claimed in any preceding claim which is a Ranch dressing or an Italian dressing.

8. A dressing composition as claimed in any preceding claim, wherein the dressing composition comprises vinegar.

9. A dressing composition as claimed in Claim 8, wherein the vinegar is balsamic vinegar.

10. A dressing composition as claimed in Claim 8 or 9, comprising from 2 to 55% by weight vinegar.

11. A dressing composition as claimed in any preceding claim, wherein the dressing comprises a dairy based product.

12. A dressing composition as claimed in Claim 11, wherein the dairy based product is yoghurt.

13. A dressing composition as claimed in Claim 11, wherein the dairy based product is buttermilk.

14. A dressing composition as claimed in any preceding claim, wherein the dressing comprises mayonnaise.

15. A dressing composition as claimed in any preceding claim, comprising a sweetener.

16. A dressing composition as claimed in any preceding claim, comprising one or more additives selected from flavours, colouring agents, vitamins, acidity regulators, preservatives, emulsifiers, thickeners, antioxidants, dietary fibres and mixtures thereof.

17. A dressing composition as claimed in any preceding claim, wherein the pinolenic acid or a derivative thereof is incorporated in the dressing composition in the form of a powder.

18. A process for producing a dressing composition of Claim 1, which comprises admixing a fat phase which comprises from 5 to 35% by weight pinolenic acid or a derivative thereof, with an aqueous phase to give the dressing composition.

19. A process as claimed in claim 18, which further comprises the step of forming an emulsion of the fat with the aqueous phase.

20. A process as claimed in Claim 18 or 19, wherein the pinolenic acid or derivative thereof is incorporated in the dressing in the form of a powder.

21. A process as claimed in Claim 20, wherein the powder is produced by spray drying the pinolenic acid or its derivatives, or a fat comprising pinolenic acid or its derivatives, with protein and/or carbohydrate.

22. A dressing composition according to any of Claims 1 to 17 for use in providing a nutritional benefit.

23. The dressing composition as claimed in Claim 22, wherein the benefit is a weight management effect.

## Patentansprüche

1. Dressingzusammensetzung mit einer Fettphase, wobei die Fettphase von 5 bis 35 Gewichtsprozent Pinolensäure oder ein Derivat davon aufweist.

2. Dressingzusammensetzung wie in Anspruch 1 beansprucht, wobei die Fettphase von 13 bis 35 Gewichtsprozent Pinolensäure oder ein Derivat davon aufweist.

3. Dressingzusammensetzung wie in Anspruch 1 oder 2 beansprucht, die von 10 bis 60 Gewichtsprozent Fett aufweist.

4. Dressingzusammensetzung wie in einem der vorangehenden Ansprüche beansprucht, die von 10 bis 45 Gewichtsprozent Fett aufweist.

5. Dressingzusammensetzung wie in einem der vorangehenden Ansprüche beansprucht, die von 10 bis 30 Gewichtsprozent Fett aufweist.

6. Dressingzusammensetzung wie in einem der vorangehenden Ansprüche beansprucht, ausgewählt aus der Gruppe bestehend aus Ranch Dressing, Italian Dressing, Blauschimmelkäsedressing, Thousand-Island-Dressing und French Dressing.

7. Dressingzusammensetzung wie in einem der vorangehenden Ansprüche beansprucht, die ein Ranch Dressing oder ein Italian Dressing ist.

8. Dressingzusammensetzung wie in einem der vorangehenden Ansprüche beansprucht, wobei die Dressingzusammensetzung Essig aufweist.

9. Dressingzusammensetzung wie in Anspruch 8 beansprucht, wobei der Essig Balsamessig ist.

10. Dressingzusammensetzung wie in Anspruch 8 oder 9 beansprucht, die 2 bis 55 Gewichtsprozent Essig aufweist.

11. Dressingzusammensetzung wie in einem der vorangehenden Ansprüche beansprucht, wobei das Dressing ein Molkereiprodukt aufweist.

12. Dressingzusammensetzung nach Anspruch 11, wobei das Molkereiprodukt Joghurt ist.

13. Dressingzusammensetzung wie in Anspruch 11 beansprucht, wobei das Molkereiprodukt Buttermilch ist.

14. Dressingzusammensetzung wie in einem der vorangehenden Ansprüche beansprucht, wobei das Dressing Mayonnaise aufweist.

15. Dressingzusammensetzung wie in einem der vorangehenden Ansprüche beansprucht, die einen Süßstoff aufweist.

16. Dressingzusammensetzung wie in einem der vorangehenden Ansprüche beansprucht, die einen oder mehrere Zusätze aufweist, die ausgewählt sind aus Geschmacksstoffen, Farbstoffen, Vitaminen, Säureregulatoren, Konservierungsmitteln, Emulgatoren, Verdickungsmitteln, Antioxidantien, diätetischen Fasern und Mischungen davon.

17. Dressingzusammensetzung wie in einem der vorangehenden Ansprüche beansprucht, wobei die Pinolensäure oder ein Derivat davon in die Dressingzusammensetzung in Form eines Pulvers eingebracht ist.

18. Prozess zur Herstellung einer Dressingzusammensetzung nach Anspruch 1, der das Vermischen einer Fettphase, die von 5 bis 35 Gewichtsprozent Pinolensäure oder ein Derivat davon aufweist, mit einer wässrigen Phase aufweist, um die Dressingzusammensetzung zu ergeben.

19. Prozess wie in Anspruch 18 beansprucht, der weiterhin den Schritt des Ausbildens einer Emulsion des Fetts mit der wässrigen Phase aufweist.

20. Prozess wie in Anspruch 18 oder 19 beansprucht, wobei die Pinolensäure oder das Derivat davon in das Dressing in Form eines Pulvers eingebracht wird.

21. Prozess wie in Anspruch 20 beansprucht, wobei das Pulver durch Sprühtrocknen der Pinolensäure oder ihrer Derivate oder eines Fetts, das Pinolensäure oder ihre Derivate aufweist, mit Protein und/oder Kohlenhydrat hergestellt wird.

22. Dressingzusammensetzung nach einem der Ansprüche 1 bis 17 zur Verwendung beim Bereitstellen von Ernährungsnutzen.

23. Dressingzusammensetzung nach Anspruch 22, wobei der Nutzen ein Gewichtsmanagementeffekt ist.

## Revendications

1. Composition d'assaisonnement comprenant une phase de matière grasse, ladite phase de matière grasse comprenant de 5 à 35 % en poids d'acide pinolénique ou d'un dérivé de celui-ci.

2. Composition d'assaisonnement selon la revendication 1, dans laquelle la phase de matière grasse comprend de 13 à 35 % en poids d'acide pinolénique ou d'un dérivé de celui-ci.

3. Composition d'assaisonnement selon la revendication 1 ou 2, qui comprend de 10 à 60 % en poids de matière grasse.

4. Composition d'assaisonnement selon l'une quelconque des revendications précédentes, qui comprend de 10 à 45 % en poids de matière grasse.

5. Composition d'assaisonnement selon l'une quelconque des revendications précédentes, qui comprend de 10 à 30 % en poids de matière grasse.

6. Composition d'assaisonnement selon l'une quelconque des revendications précédentes, choisie dans le groupe constitué par l'assaisonnement Ranch, l'assaisonnement italien, l'assaisonnement au fromage bleu, l'assaisonnement Mille-îles et la vinaigrette.

7. Composition d'assaisonnement selon l'une quelconque des revendications précédentes, qui est un assaisonnement Ranch ou un assaisonnement italien.

8. Composition d'assaisonnement selon l'une quelconque des revendications précédentes, dans laquelle la composition d'assaisonnement comprend du vinaigre.

9. Composition d'assaisonnement selon la revendication 8, dans laquelle le vinaigre est du vinaigre balsamique.

10. Composition d'assaisonnement selon la revendication 8 ou 9, comprenant de 2 à 55 % en poids de vinaigre.

11. Composition d'assaisonnement selon l'une quelconque des revendications précédentes, dans laquelle l'assaisonnement comprend un produit laitier.

12. Composition d'assaisonnement selon la revendication 11, dans laquelle le produit laitier est du yaourt.

13. Composition d'assaisonnement selon la revendication 11, dans laquelle le produit laitier est du babeurre.

14. Composition d'assaisonnement selon l'une quelconque des revendications précédentes, dans laquelle l'assaisonnement comprend de la mayonnaise.

15. Composition d'assaisonnement selon l'une quelconque des revendications précédentes, comprenant un édulcorant.

16. Composition d'assaisonnement selon l'une quelconque des revendications précédentes, comprenant un ou plusieurs additifs choisis parmi les arômes, les agents colorants, les vitamines, les régulateurs d'acidité, les conservateurs, les émulsifiants, les épaississants, les antioxydants, les fibres diététiques et des mélanges de ceux-ci.

17. Composition d'assaisonnement selon l'une quelconque des revendications précédentes, dans laquelle l'acide pinolénique ou un dérivé de celui-ci est incorporé dans la composition d'assaisonnement sous la forme d'une poudre.

18. Procédé pour produire une composition d'assaisonnement selon la revendication 1, qui comprend le mélange d'une phase de matière grasse qui comprend de 5 à 35 % en poids d'acide pinolénique ou d'un dérivé de celui-ci, avec une phase aqueuse pour donner la composition d'assaisonnement.

19. Procédé selon la revendication 18, qui comprend en outre l'étape consistant à former une émulsion de la matière grasse avec la phase aqueuse.

20. Procédé selon la revendication 18 ou 19, dans lequel l'acide pinolénique ou un dérivé de celui-ci est incorporé dans l'assaisonnement sous la forme d'une poudre.

21. Procédé selon la revendication 20, dans lequel la poudre est produite en séchant par pulvérisation l'acide pinolénique ou ses dérivés, ou une matière grasse comprenant de l'acide pinolénique ou ses dérivés, avec une protéine et/ou un glucide.

22. Composition d'assaisonnement selon l'une quelconque des revendications 1 à 17, pour l'utilisation dans la fourniture d'un bénéfice nutritionnel.

23. Composition d'assaisonnement selon la revendication 22, dans laquelle le bénéfice est un effet de gestion du poids.
